# EUROPÄISCHE PATENTSCHRIFT

(11) **EP 0 928 235 B1**
(45) Veröffentlichungstag und Bekanntmachung des Hinweises auf die Patenterteilung: **16.06.2004**
(21) Anmeldenummer: 97910343.9
(22) Anmeldetag: 24.09.1997
(51) Int. Cl.: B23Q 1/01

(54) **WERKZEUGMASCHINE ZUR SPANENDEN BEARBEITUNG MIT HORIZONTAL ANGEORDNETER ARBEITSSPINDEL**
MACHINE TOOL FOR CUTTING PROCESSES WITH A HORIZONTALLY LODGED WORK SPINDLE
MACHINE-OUTIL POUR USINAGE PAR ENLEVEMENT DE COPEAUX, PRESENTANT UNE BROCHE DE TRAVAIL HORIZONTALE

(30) Priorität: 26.09.1996 DE 19639527
(43) Veröffentlichungstag der Anmeldung: 14.07.1999
(73) Patentinhaber: Hüller Hille GmbH, 71636 Ludwigsburg (DE)
(72) Erfinder: HORN, Wolfgang, D-74385 Pleidelsheim (DE); GEIGER, Dietrich, D-71723 Gro bottwar (DE)
(74) Vertreter: Dahlkamp, Heinrich-Leopold, Dipl.-Ing.
(86) Internationale Anmeldenummer: PCT/EP1997/005237
(87) Internationale Veröffentlichungsnummer: WO 1998/013170

(56) Entgegenhaltungen:
- EP-A- 0 232 548
- DE-A- 3 333 480
- DE-C- 3 832 975
- US-A- 4 987 668

## Beschreibung

Die Erfindung bezieht sich auf eine Werkzeugmaschine nach dem Oberbegriff des Anspruch 1.

Eine solche Werkzeugmaschine wird in DE-A-3333480, das als nächstliegender Stand der Technikangesehen wird, beschrieben.

Aus der US-A-4,987,668 ist eine gattungsgemäße Werkzeugmaschine bekannt, wobei der Werkzeugträger senkrecht auf einem Maschinenständer angeordnet ist und die waagerecht angeordnete Spindel in X- und Y-Richtung verfahrbar ist. Der Werkstückträger ist ebenfalls auf dem Maschinenständer angeordnet und sowohl in Z-Richtung verschiebbar als auch um eine senkrechte Achse drehbar. Eine Verfahrbarkeit der Arbeitsspindel in Z-Richtung ist hierbei nicht möglich bzw. nicht vorgesehen.

In der EP-0 232 548 A2 ist eine Bearbeitungsstation, insbesondere für vergleichsweise große Werkstücke, mit einer vorzugsweise einen Laser aufweisenden Bearbeitungseinheit beschrieben, wobei die Bearbeitungseinheit ebenfalls an einem rahmenartigen senkrechten Ständer angeordnet ist und in X-, Y- und Z-Richtung verfahrbar ist. Bei bestimmten Anwendungsfällen, z. B. bei einer Hochgeschwindigkeitsund/oder Hochpräzisionsbearbeitung hat sich gezeigt, daß beim Verfahren der Bearbeitungseinheit in Z-Richtung hohe Beschleunigungsund Bearbeitungskräfte auf den Werkzeugträger einwirken. Das kann zu Ungenauigkeiten bei der Bearbeitung führen und verlangt eine sehr stabile und teure Konstruktion des Werkzeugträgers, insbesondere bei einem sehr großen Arbeitsraum und hoher Vorschubgeschwindigkeit bzw. Beschleunigung. Außerdem kommt es bei bisher bekannten Bearbeitungszentren durch Zuschalten von Kühlmittel, unterschiedliche Kühlmitteltemperaturen und Veränderungen der Hallentemperatur oftmals zu erheblichen Verlagerungen zwischen Werkzeugseite und Werkstückseite.

Aus der DE 38 32 975 C1 ist ein Mehrspindel-Drehautomat mit Rahmengehäuse bekannt, das aus einem unteren Maschinenbett, einem Spindelständer mit schaltbarer Spindeltrommel, einem Antriebsständer für die Antriebe der Bearbeitungswerkzeuge und einem oberen Querbalken zwischen Spindel- und Antriebsständer besteht. Der Arbeitsraum ist dabei von einem Zentralrohr durchsetzt, auf dem ein Längsschlittenblock angeordnet ist und das einerseits in der Spindeltrommel und andererseits im Antriebsständer gelagert ist. Eine Verfahrbarkeit der Spindel mit Hilfe von X-, Y- und Z-Schlitten ist hierbei nicht vorgesehen. Außerdem können nur relativ kleine Werkstücke bearbeitet werden.

Der Erfindung liegt daher die Aufgabe zugrunde, eine gattungsgemäße Werkzeugmaschine vorzuschlagen, bei der diese Probleme nicht bestehen und eine exakte Positionierung der Bearbeitungseinheit relativ zum Werkstück möglich ist.

Die Lösung dieser Aufgabe ist im Kennzeichen des Anspruches 1 wiedergegeben. Die Unteransprüche 2 bis 5 enthalten sinnvolle Ausführungsformen dazu.

Erfindungsgemäß werden auf einem Maschinenunterständer ein senkrechter, rahmenartiger Werkzeugträger und parallel gegenüberliegend auch ein senkrechter rahmenartiger Werkstückträger angeordnet und die oberen, im wesentlichen gleich hohen waagerechten Querträger dieser beiden Träger werden über einen oder mehrere vorzugsweise waagerechte Verbindungsträger zu einer stabilen Einheit verbunden. Damit ist auch in Z-Richtung ein rahmenartiges Gebilde entstanden, das auch bei hohen Beschleunigungs- und Bearbeitungskräften eine Relativbewegung zwischen Werkstückträger und Werkzeugträger verhindert. Gleichzeitig ist somit auch eine präzise Positionierung zwischen Werkzeug und Werkstück möglich. Der Werkstückträger kann ebenfalls, ähnlich wie der Werkzeugträger, in X-und Y-Richtung rahmenartig ausgebildet sein, so daß das Werkstück innerhalb dieses Rahmens auf einfache Weise positioniert wird. Das Werkstück kann durch den Rahmen hindurch in Z-Richtung bewegt werden und gegebenenfalls in X- oder Y-Richtung in die Werkzeugmaschine hinein- oder aus ihr heraustransportiert werden.

Der Verbindungsträger zwischen Werkzeugträger und Werkstückträger kann insbesondere außermittig, d. h. an einer oder an beiden Längsseiten, angeordnet sein, so daß der Raum direkt über der Bearbeitungsstelle, z. B. zum Be- und Entladen des Werkstückes, freibleibt. Eine einseitige außermittige Anordnung eines Verbindungsträgers kann den Vorteil haben, daß von der gegenüberliegenden Seite ein besserer Zugang zum Bearbeitungsraum ermöglicht wird.

Der Verbindungsträger kann auch gabelförmig ausgebildet sein, wobei zwei Schenkel der Gabel am oberen Ende der senkrechten Seitenständer des Werkzeugträgers oder des Werkstückträgers angreifen und der gegenüberliegende Schenkel mit einem oberen Querträger des Werkstückträgers bzw. des Werkzeugträgers verbunden ist. Hierbei werden der Größe und der Form der Werkstücke, der Werkzeugwechseleinrichtungen und den übrigen Erfordernissen angepaßte Konstruktionen ermöglicht.

Um z. B. Werkstücke in Z-Richtung von beiden Seiten gleichzeitig bearbeiten zu können, ist es erfindungsgemäß auch möglich, zwischen einem Werkstückträger an beiden Seiten Werkzeugträger anzuordnen, die ebenfalls über Verbindungsträger mit dem Werkstückträger verbunden sind.

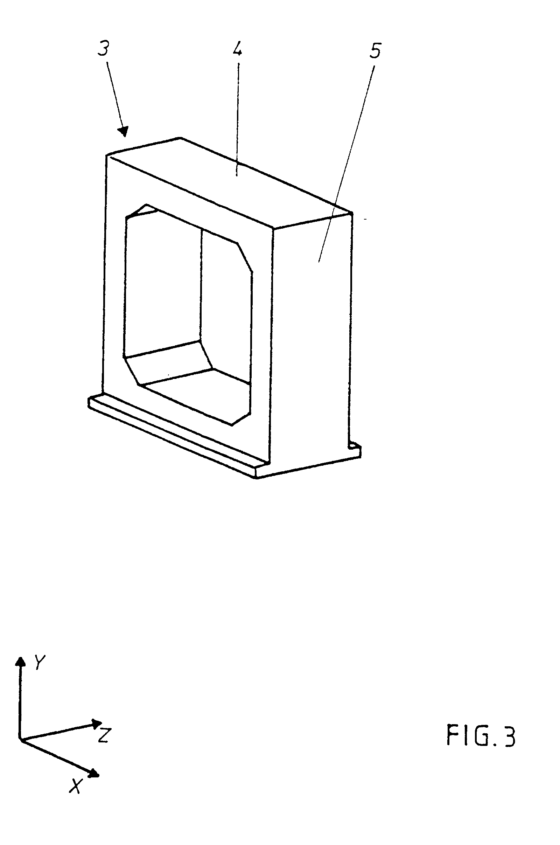

Die Erfindung wird anhand der beigefügten Figuren 1 bis 4 beispielsweise näher erläutert. Es zeigen jeweils in perspektivischer Darstellung
- Figur 1: einen Verbindungsträger 8 zwischen Werkstückträger 2 und Werkzeugträger 3, die auf einem Maschinenunterständer 1 angeordnet sind;
- Figur 2: als Einzelheit einen Werkstückträger 2 mit einem daran befestigten gabelartigen Verbindungsträger 8;
- Figur 3: als Einzelheit einen Werkzeugträger 3 und
- Figur 4: die Einrichtungen zur Verfahrbarkeit der Arbeitsspindel 15 an dem Werkzeugträger 3.

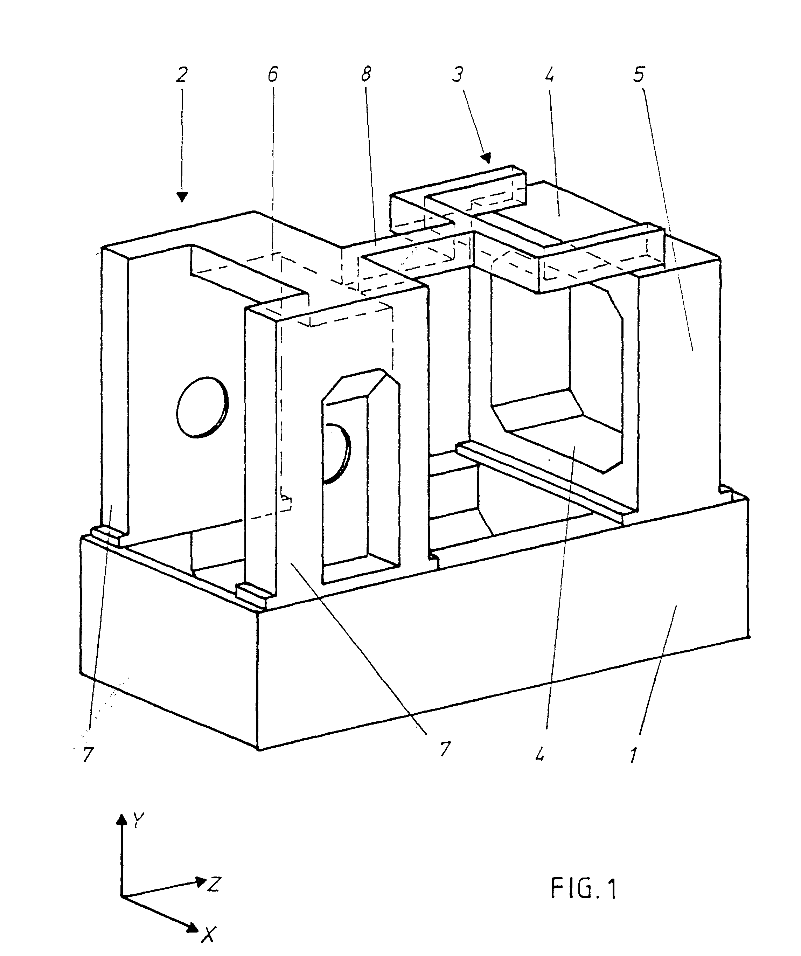

In Figur 1 ist auf einem Maschinenunterständer 1 ein aus senkrechten Seitenwangen 5 und waagerechten Querbalken 4 bestehender Werkzeugträger 3 und parallel dazu gegenüberliegend ein aus senkrechten Stützen 7 und oberen Querträgern 6 gebildeter Werkstückträger 2 dargestellt. Der waagerechte Querbalken 4 und der obere Querträger 6 sind über einen Verbindungsträger 8 miteinander verbunden.

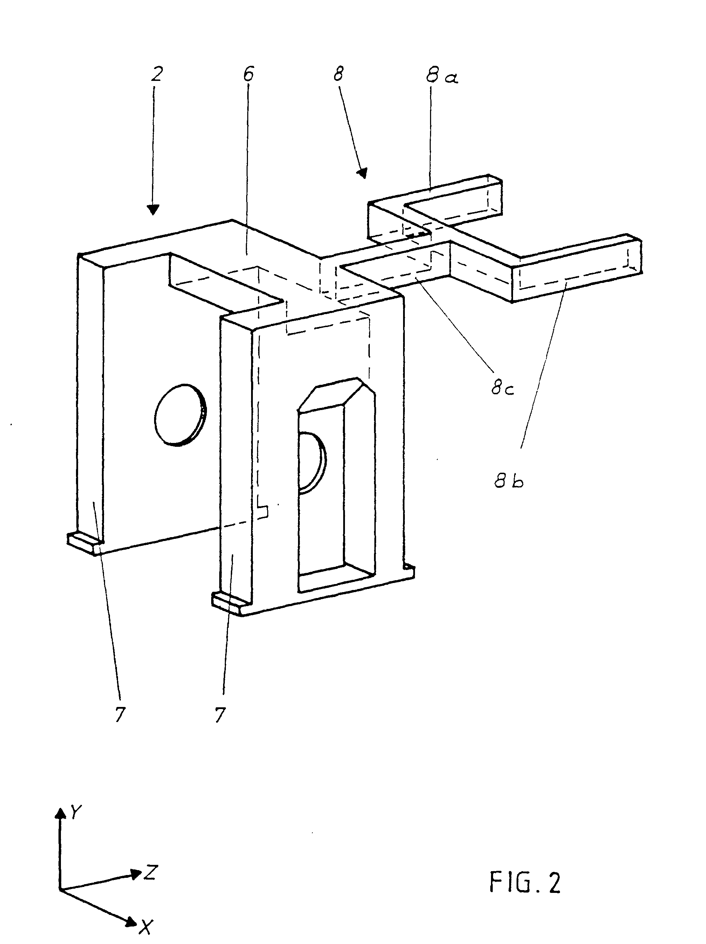

Nach Figur 2 ist der Verbindungsträger 8 gabelförmig ausgebildet und mit einem Schenkel 8c am oberen Querträger 6 befestigt, während die Enden der beiden Schenkel 8a und 8b mit dem waagerechten Querbalken 4 verbunden werden können. Der Schenkel 8c kann entsprechend den räumlichen Gegebenheiten und den Festigkeitserfordernissen mittig oder außermittig oder auch an einem Ende des Querträgers 6 befestigt sein.

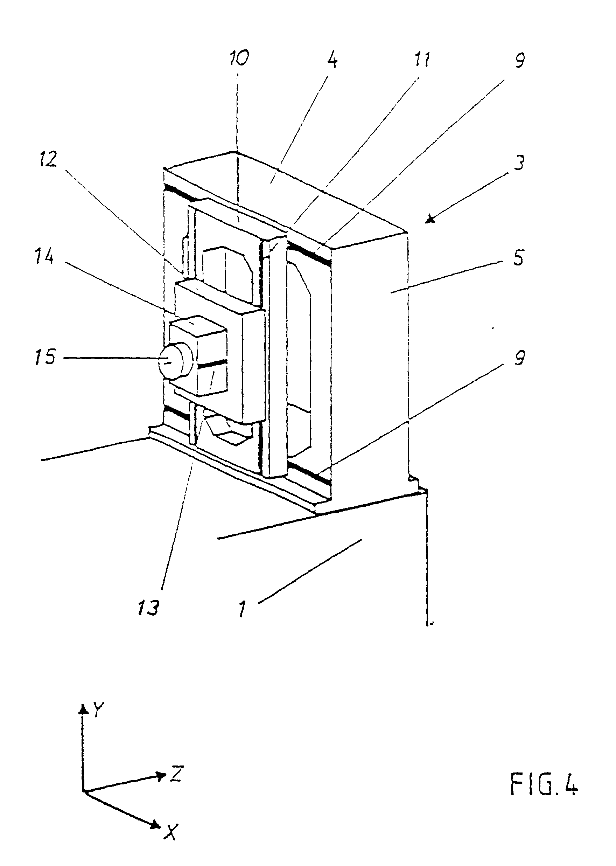

Aus Figur 4 ist ersichtlich, in welcher Weise die Arbeitsspindel 15 innerhalb des rahmenartigen Werkzeugträgers 3 verfahrbar ist. Dazu ist zunächst ein rahmenartiger X-Schlitten 10 in waagerechten Führungen 9 in X-Richtung verfahrbar. Zusätzlich ist der wiederum rahmenartige Y-Schlitten 12 an senkrechten Führungen 11 in Y-Richtung verfahrbar. Außerdem ist der pinolenartige Z-Schlitten 14 mit integrierter Motorarbeitsspindel in den waagerechten Führungen 13 in Z-Richtung verfahrbar. Der Werkzeugträger 3, der X-Schlitten 10 und der Y-Schlitten 12 können hohl ausgeführt und mit einer Umlaufkühlung versehen werden.

### Bezugszeichenliste

- (1): Maschinenunterständer
- (2): Werkstückträger
- (3): Werkzeugträger
- (4): waagerechter Querbalken von (3)
- (5): senkrechte Seitenwange von (3)
- (6): oberer Querträger von (2)
- (7): senkrechte Stützen von (2)
- (8): Verbindungsträger zwischen (2) und (3)
- (8a, 8b): Schenkel von (8) mit (4), (5) verbunden
- (8c): Schenkel von (8) mit (2), (6) verbunden
- (9): Führung an (3/10)
- (10): X-Schlitten
- (11): Führungen an (10/12)
- (12): Y-Schlitten
- (13): Führungen (12/14)
- (14): Z-Schlitten
- (15): Motorspindel, Arbeitsspindel

## Patentansprüche

1. Werkzeugmaschine zur spanenden Bearbeitung von Werkstücken mit mindestens einem Maschinenunterständer (1), einem rahmenartigen, senkrecht auf dem Maschinenunterständer angeordneten Werkzeugträger (3) mit einem oberen waagerechten Querträger (4) und einer horizontal angeordneten Arbeitsspindel, vorzugsweise zur Hochgeschwindigkeitsund/oder Hochpräzisionsbearbeitung, die an und/oder innerhalb des Werkzeugträgers mit X-, Y- und Z-Schlitten verfahrbar ist, **dadurch gekennzeichnet, dass** dem rahmenartigen Werkzeugträger (3) ein rahmenartiger Werkstückträger (2) mit einem oberen waagerechten Querträger (6) zugeordnet ist, der ebenfalls senkrecht auf dem Maschinenunterständer (1) angeordnet ist und dass Werkstückträger (2) und Werkzeugträger (3) im Bereich ihrer oberen waagerechten Querträger (4, 6) über einen oder mehrere Verbindungsträger (8) zu einer stabilen Einheit verbunden sind.

2. Werkzeugmaschine nach Anspruch 1, **dadurch gekennzeichnet, dass** der Verbindungsträger (8) außermittig angeordnet ist.

3. Werkzeugmaschine nach Anspruch 1 oder 2, **dadurch gekennzeichnet, dass** der Verbindungsträger (8) im Bereich einer oder beider Längsseiten des Maschinenunterständers (1) angeordnet ist.

4. Werkzeugmaschine nach mindestens einem der vorhergehenden Ansprüche, **dadurch gekennzeichnet, dass** der Verbindungsträger (8) gabelförmig ausgebildet und jeweils ein Schenkel (8a, 8b) am oberen Ende der senkrechten Seitenwangen (5) des Werkzeugträgers (3) und ein Schenkel (8c) mit einem oberen Querträger (6) des Werkstückträgers (2) verbunden ist.

5. Werkzeugmaschine nach mindestens einem der vorhergehenden Ansprüche, **dadurch gekennzeichnet, dass** in Z-Richtung beiderseits eines Werkstückträgers (2) jeweils Werkzeugträger (3) angeordnet und über Verbindungsträger (8) damit verbunden sind.

## Revendications

1. Machine-outil pour usinage par enlèvement de copeaux de pièces présentant au moins un montant de machine (1), un porte-outil (3) en forme de cadre, disposé verticalement sur le montant de machine avec une poutre transversale horizontale supérieure (4), une broche de travail horizontale, de préférence pour l'usinage à haute vitesse et/ou l'usinage de précision, ladite broche de travail se déplaçant sur et/ou à l'intérieur du porte-outil avec les chariots X, Y et Z, **caractérisée en ce qu'**un porte-pièce (2), en forme de cadre est affecté au porte-outil (3) en forme de cadre, ledit porte-pièce étant également disposé verticalement sur le montant de machine (1) et que le porte-pièce (2) et le porte-outil (3) sont reliés l'un à l'autre au niveau de leurs traverses horizontales supérieures (4, 6) par l'intermédiaire d'une ou de plusieurs traverses de jonction (8) pour former une unité stable.

2. Machine-outil selon la revendication 1, **caractérisée par le fait que** la traverse de jonction (8) a une position excentrée.

3. Machine-outil selon la revendication 1 ou 2, **caractérisée par le fait que** la traverse de jonction (8) est disposée au niveau d'un côté longitudinal ou des deux côtés longitudinaux du montant de machine (1).

4. Machine-outil selon au moins une des revendications précédentes, **caractérisée par le fait que** la traverse de jonction (8) se présente sous forme de fourche et qu'une aile (8a, 8b) est reliée à l'extrémité supérieure des joues latérales verticales (5) du porte-outil (3) et qu'une aile (8c) est reliée à une traverse supérieure (6) du porte-pièce (2).

5. Machine-outil selon au moins une des revendications précédentes, **caractérisée en ce que** des porte-outils (3) sont disposés selon l'axe Z des deux côtés d'un porte-pièce (2) et qu'ils y sont reliés par des traverses (8).

## Claims

1. A machine tool for cutting processing of work pieces with at least one machine support post (1), a frame-like tool carrier (3) vertically arranged on said machine support post, said tool carrier provided with an upper horizontal traverse (4) and a horizontally lodged work spindle, preferably for high-speed and/or high-precision processing, movable at and/or within the tool carrier with X-, Y-, and Z-sledges, **characterized in that** a frame-like work piece carrier (2) provided with an upper horizontal traverse (6) is allocated to said frame-like tool carrier (3), said work piece carrier also being vertically arranged on said machine support post (1), and
**characterized in that** said work piece carrier (2) and tool carrier (3) are connected to each other in the area of their upper horizontal traverses (4,6) via one or several connecting bar(s) (8) to form a stable unit.

2. A machine tool in accordance with claim 1,**characterized in that** said connecting bar (6) is arranged eccentrically.

3. A machine tool in accordance with any of claim 1 or 2, **characterized in that** said connecting bar (8) is arranged in the area of one or both longitudinal side(s) of said machine support post (1).

4. A machine tool in accordance with at least one of the preceding claims, **characterized in that** said connecting bar (8) is of a fork-like design and construction, wherein one leg each (8a, 8b) at the upper end of the vertical side cheeks (5) of said tool carrier (3) and one leg (8c) is connected to an upper traverse (6) of said work piece carrier (2).

5. A machine tool in accordance with any of the preceding claims, **characterized in that** tool carriers (3) each are arranged in z-direction at both sides of a work piece carrier (2) and linked to it via connecting bars (8).
